# EUROPEAN PATENT APPLICATION

(11) **EP 4 087 086 A1**
(43) Date of publication of application: **09.11.2022**
(21) Application number: 22170202.0
(22) Date of filing: 27.04.2022
(51) Int. Cl.: H02J 7/00, H02J 9/06

(54) **BACKUP POWER SUPPLY DEVICE AND CHARGE/DISCHARGE CONTROL METHOD**

(30) Priority: 28.04.2021 JP 2021075632
(71) Applicant: FDK Corporation, Tokyo 108-8212 (JP)
(72) Inventor: Saito, Yosuke, Tokyo, 108-8212 (JP); Hiwatashi, Kazuhiro, Tokyo, 108-8212 (JP)
(74) Representative: Epping - Hermann - Fischer

(57) **Abstract**

A backup power supply device 1 is provided with: first to fifth battery packs BP1 to BP5 connected in parallel; a charger 10 that supplies a charge current to each battery pack; first to fifth charge switches SWc1 to SWc5 that individually connect and disconnect charge paths of the respective battery packs; and a controller 30 that controls each charge switch. The controller 30 divides the battery packs into a plurality of groups and performs pulse-width modulation (PWM) control of each charge switch at a duty ratio corresponding to the number of batteries in each group to charge the battery packs for each group.

## Description

### BACKGROUND OF THE INVENTION

### Field of the Invention

The present invention relates to a backup power supply device and a charge/discharge control method.

### Description of the Related Art

When the supply of power from an external power supply to a load device stops due to a power outage or the like, a backup power supply device supplies power from a previously charged secondary battery to the load device, thus enabling the load device to operate continuously. In general, a backup power supply device has a plurality of secondary batteries built therein and is connected on a conduction path between an external power supply and a load device, so that in a normal state where there is no power outage, the secondary batteries are charged with power supplied from the external power supply.

Here, a charger for charging the secondary battery boosts a voltage supplied from the external power supply to output a charge voltage higher than the battery voltage of the secondary battery which rises with the progress of charge. Therefore, the battery voltage of the secondary battery may exceed an upper limit voltage, which is an upper limit to voltages that can be applied to the load device, particularly immediately after the secondary battery has been charged to come into a fully charged state, and hence there is a possibility that the load device fails when the secondary battery is discharged as it is.

For dealing with such a problem, in an uninterruptible power supply device disclosed in Japanese Patent Laid-Open No. 2016-10250, two battery packs are connected in parallel, and one of the battery packs is inhibited from being discharged while being charged or until its battery voltage drops below the upper limit voltage of a load device, and during that period, the other battery pack is made to stand by in a dischargeable state. Hence in the uninterruptible power supply device, the internal battery packs can be sufficiently charged and also made to stand by in the state of being dischargeable at all times, and the battery packs can be discharged without causing the load device to fail even at the time of power outage.

In the backup power supply device as described above, as an assumed continuous operating time is longer, the number of built-in secondary batteries in parallel increases. When a plurality of secondary batteries connected in parallel are then divided into a group to be charged and a group to stand by in a dischargeable state, the number of secondary batteries belonging to each group may be different from each other. When the number of batteries in each group is different, a charge rate (charge speed) is different for each group unless a charge current output from the charger is controlled, and due to a difference in timing for stopping the charge at the time of full charge a charge capacity after the completion of the charge may become uneven.

The present invention has been made in view of such circumstances, and it is an object of the present invention to provide a backup power supply device and a charge/discharge control method capable of equalizing charge rates among groups without changing a charge current output by a charger even when there is a difference in the number of batteries of the group to be charged simultaneously.

### SUMMARY OF THE INVENTION

In order to achieve the above object, a backup power supply device of the present invention is provided with: a plurality of secondary batteries connected in parallel; a charger that supplies a charge current to each of the secondary batteries; a plurality of charge switches that individually connect and disconnect charge paths of a plurality of the secondary batteries; and a controller that controls a plurality of the charge switches. The controller divides a plurality of the secondary batteries into a plurality of groups and performs pulse-width modulation (PWM) control of each of the charge switches at a duty ratio corresponding to the number of batteries in each of the groups to charge the secondary batteries for each of the groups.

A charge/discharge control method of the present invention is a charge/discharge control method for a plurality of secondary batteries connected in parallel in which charge paths are individually connected and disconnected by a plurality of charge switches, the method including: allocating a plurality of the secondary batteries into a plurality of groups; and performing PWM control of each of the charge switches at a duty ratio corresponding to the number of batteries in each of the groups to charge the secondary batteries for each of the groups.

According to the present invention, it is possible to provide a backup power supply device and a charge/discharge control method capable of equalizing charge rates of groups without changing a charge current output by a charger even when there is a difference in the number of batteries of the group to be charged simultaneously.

### BRIEF DESCRIPTION OF THE DRAWINGS

FIG. 1 is a circuit diagram of a backup power supply device according to a first embodiment;
FIG. 2 is a flowchart illustrating an outline of a charge control procedure of the backup power supply device;
FIG. 3 is a timing chart illustrating battery voltages of battery packs and operations of charge switches when a first group and a second group are charged sequentially; and
FIG. 4 is a timing chart illustrating battery voltages of battery packs and operations of charge switches when each group according to a second embodiment is charged sequentially.

### DETAILED DESCRIPTION OF THE PREFERRED EMBODIMENTS

Embodiments of the present invention will be described in detail below with reference to the drawings. Note that the present invention is not limited to the content described below but may be arbitrarily changed and implemented in a range where the gist of the present invention is not changed. All of the drawings used in the description of the embodiments schematically illustrate constituent members. Partial emphasis, enlargement, reduction, omission, or the like has been made to deepen the understanding, and there are cases where the drawings do not accurately represent the scale, shape, or the like of each of the constituent members.

### <First Embodiment>

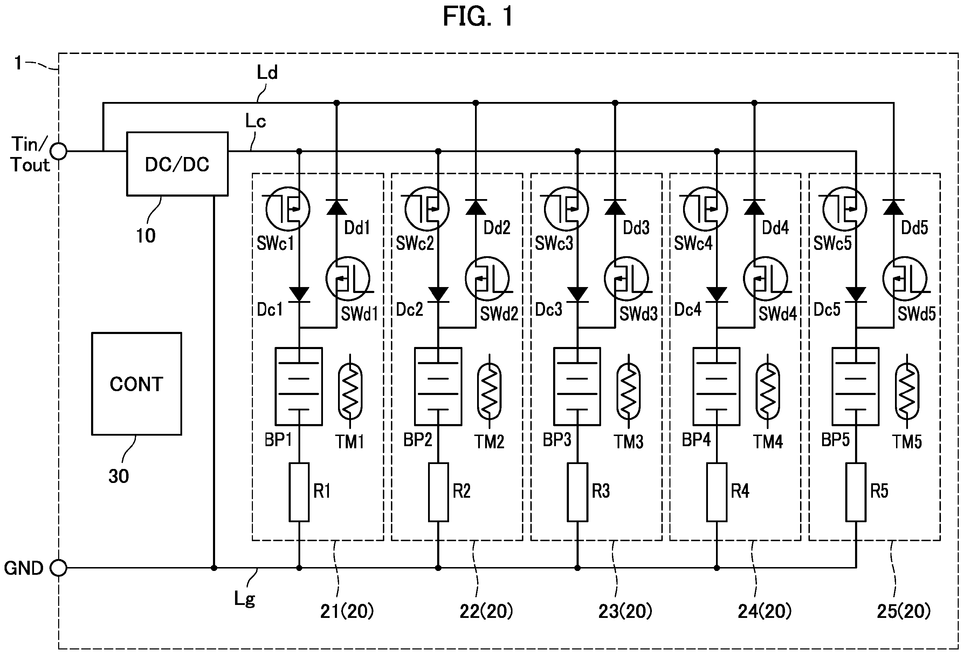

FIG. 1 is a circuit diagram of a backup power supply device 1 according to a first embodiment. The backup power supply device 1 is a standby power supply that is provided with an input/output terminal Tin/Tout and a ground terminal GND and is connected on, for example, a conduction path between an external power supply and a load device (not illustrated) so as to charge and discharge a plurality of battery packs BP1 to BP5 built in the device as described in detail later. The backup power supply device 1 of the present embodiment includes a charger 10, a battery module 20, a charge line Lc, a discharge line Ld, a ground line Lg, and a controller 30.

The charger 10 is a DC-to-DC converter that converts a voltage supplied from the external power supply via the input/output terminal Tin/Tout into a voltage suitable for charge and outputs the voltage to the charge line Lc. The charger 10 maintains an output current constant during execution of charge control, boosts a charge voltage in accordance with a battery voltage of a secondary battery to be charged among the plurality of battery packs BP1 to BP5 connected in parallel, and charges the secondary battery until the secondary battery comes into a fully charged state.

The battery module 20 includes a plurality of batteries connected in parallel, charge/discharge paths corresponding thereto, and the like, and in the present embodiment, the battery module 20 is made up of a first module 21, a second module 22, a third module 23, a fourth module 24, and a fifth module 25. Note that the number of modules is not limited thereto but only needs to be plural.

The first module 21 includes a first battery pack BP1 serving as a "secondary battery," a first charge switch SWc1, a first charge diode Dc1, a first discharge diode Dd1, a first discharge switch SWd1, a first resistor R1, and a first thermistor TM1.

The first battery pack BP1 is made up of, for example, a plurality of alkaline secondary batteries connected in series. In a normal state where there is no power outage, the first battery pack BP1 is charged by the charger 10 via the charge line Lc, the first charge switch SWc1, and the first charge diode Dc1.

At the time of power outage, the first battery pack BP1 can be discharged to a load device (not illustrated) connected to the input/output terminal Tin/Tout via the first discharge switch SWd1, the first discharge diode Dd1, and the discharge line Ld.

Here, the first battery pack BP1 is connected to the ground terminal GND via the first resistor R1 serving as a shunt resistor and a ground line Lg, and a charge current is measured using a current flowing through the shunt resistor. The first thermistor TM1 is provided near the first battery pack BP1, and the battery temperature of the first battery pack BP1 is measured.

The second to fifth modules 22 to 25 have the same configuration as that of the first module 21, and hence detailed description thereof will be omitted here.

The controller 30 includes, for example, a known microcomputer control circuit and manages the overall operation of the backup power supply device 1. More specifically, the controller 30 individually acquires the battery voltage, charge current, and battery temperature of each of the first to fifth battery packs BP1 to BP5 and receives a discharge request from the load device or a shutdown signal from external equipment as an interrupt signal. The controller 30 controls the on/off state and the boosting operation of the charger 10 and also controls the first to fifth charge switches SWc1 to SWc5 and the first to fifth discharge switches SWd1 to SWd5 to be connected and disconnected individually.

Next, a charge/discharge control method for the backup power supply device 1 will be described in more detail. When a discharge request is received from an external load device, the controller 30 controls all of the first to fifth charge switches SWc1 to SWc5 to be off and controls the first to fifth discharge switches SWd1 to SWd5 to be on regardless of whether or not the battery packs are in a state of charge control, thereby supplying power from each battery pack to the load device via the discharge line Ld and the input/output terminal Tin/Tout.

Here, there is a possibility that the battery voltage of each of the first to fifth battery packs BP1 to BP5 has exceeded an upper limit voltage Vu, which is an upper limit to voltages that can be supplied to the load device, particularly in a state immediately after the battery is fully charged. When the battery pack with its battery voltage exceeding the upper limit voltage Vu is connected to the load device at the time of the discharge request, there is a possibility of causing the load device to fail. Therefore, in such a case, the controller 30 controls only the discharge switch among the first to fifth battery packs BP1 to BP5 to be on, the discharge switch corresponding to the battery pack in which the battery voltage is less than the upper limit voltage Vu.

Note that there may be a difference in battery voltage among the battery packs depending on the progress of discharge, but in this case, a battery having a high battery voltage is discharged preferentially, and the battery voltages are equalized with the progress of discharge.

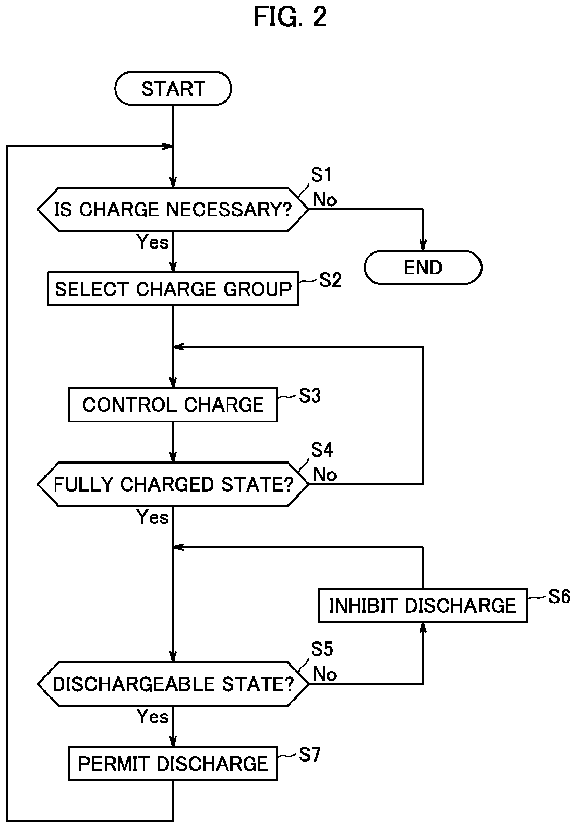

FIG. 2 is a flowchart schematically illustrating a charge control procedure of the backup power supply device 1. The controller 30 executes the procedure at the time of activation and on a regular basis to charge the battery pack in which the battery voltage has decreased.

First, the controller 30 acquires the battery voltages of the first to fifth battery packs BP1 to BP5 and determines whether or not any of the battery packs needs to be charged (step S1). When there is a battery to be charged (Yes in step S1), the controller 30 turns on the switch corresponding to the battery pack to be charged among the first to fifth charge switches SWc1 to SWc5 and drives the charger 10.

Here, the controller 30 divides the battery packs into a first group and a second group and charges the batteries for each group. In the present embodiment, a description will be given taking the first to third battery packs BP1 to BP3 as the first group and the fourth and fifth battery packs BP4, BP5 as the second group. The groups can be formed in any manner and may be formed in advance or formed each time. When the backup power supply device 1 includes more battery packs, three or more groups may be formed.

When, for example, the first group is selected as a group to be charged (step S2), the controller 30 performs PWM control of the first to third charge switches SWc1 to SWc3 while controlling the fourth and fifth charge switches SWc4, SWc5 to be off, thereby performing the charge control of the first to third battery packs BP1 to BP3 (step S3).

Here, in the charge control, the charge switch to be controlled is PWM controlled at a duty ratio corresponding to the number of batteries in the group to be charged. For example, in the present embodiment, the number of batteries in the first group is three, and the number of batteries in the second group is two. Therefore, a duty ratio for charging the first group and a duty ratio for charging the second group are set at a ratio of 3:2. That is, when the battery in the first group is charged at a duty ratio of 100%, the battery in the second group is charged at a duty ratio of about 67%. As a result, each battery pack is charged at the same charge rate.

When the charge of the battery pack in the first group is started at a duty ratio of 100%, the controller 30 determines whether or not the battery pack in the first group has been charged to come into a fully charged state (step S4). Then, the controller 30 continues the charge control based on the duty ratio until the battery pack in the first group reaches the fully charged state (No in step S4) .

When the battery pack in the first group reaches the fully charged state (Yes in step S4), the controller 30 compares the battery voltage of the battery pack in the first group with the upper limit voltage Vu of the load device and determines whether or not the battery pack in the first group is in a dischargeable state (step S5).

During a period in which the battery voltage of the battery pack in the first group is equal to or greater than the upper limit voltage Vu of the load device (No in step S5), the controller 30 inhibits the discharge of the battery pack in the first group, assuming that the battery pack is not in the dischargeable state (step S6).

On the other hand, when the battery voltage of the battery pack in the first group falls below the upper limit voltage Vu of the load device (Yes in step S5), the controller 30 permits the discharge of the battery pack in the first group, assuming that the battery pack in the first group has come into the dischargeable state (step S7).

Further, the controller 30 again determines whether or not any of the battery packs needs to be charged (step S1). When the battery pack in the second group also needs to be charged (Yes in step S1), the controller 30 selects the second group as the charge group (step S2) and charges the second group at a duty ratio of 67% in the same procedure as the first group. Then, when it is determined that the charge of all the groups is unnecessary (No in step S1), the series of charge control procedures is ended.

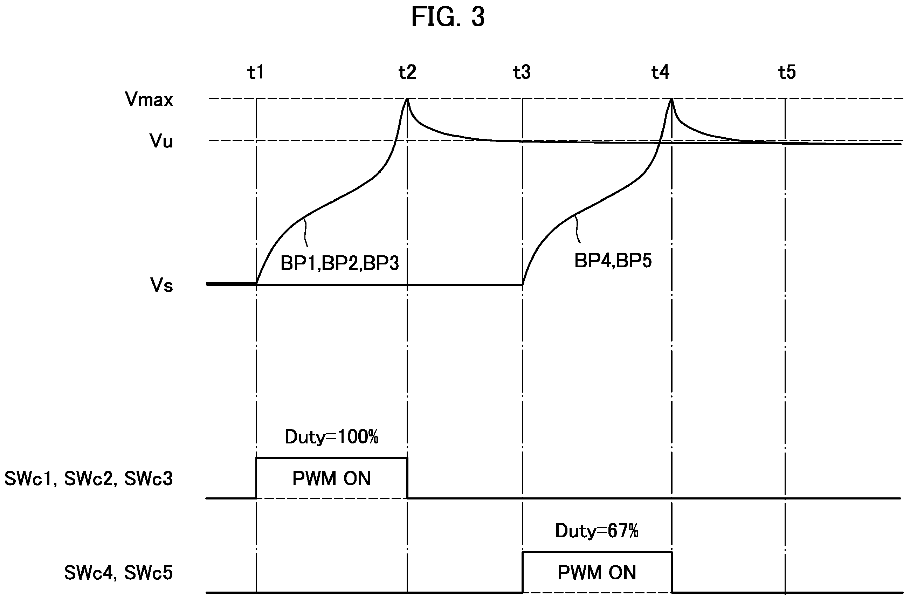

Next, a change in the state of each battery pack according to the charge control procedure will be described. FIG. 3 is a timing chart illustrating the battery voltages of the battery packs and the operations of the charge switches when the first group and the second group are charged sequentially. Here, at the time of activation of the controller 30, in each of the first to fifth battery packs BP1 to BP5, a battery voltage before the start of charge is assumed to be an initial voltage Vs that is required for charge. Further, at the time of activation of the controller 30, each charge switch and each discharge switch are in an off state.

When the backup power supply device 1 is connected on, for example, the conduction path between the external power supply and the load device and is supplied with power, the controller 30 is activated to perform an initial operation such as confirmation of connection with the external equipment. Further, by executing the charge control procedure described above, the controller 30 performs PWM control of the first to third charge switches SWc1 to SWc3 corresponding to the first group at a duty ratio of 100% at timing t1 and starts charging the first to third battery packs BP1 to BP3.

Here, the controller 30 may acquire a charge current supplied to each battery pack in the group to be charged, and may individually correct the duty ratio based on the current difference in order to make the charge current a desired current. More specifically, when there is a current difference in the charge current and the charge current supplied to the second battery pack BP2 is slightly larger than the charge current supplied to the first battery pack BP1, for example, the duty ratio of the second charge switch SWc2 is reduced to, for example, 99% in accordance with the difference. It is thereby possible to equalize charge rates among the battery packs in the group to be charged simultaneously.

When each battery pack in the first group reaches the fully charged state at timing t2, the controller 30 stops the first to third charge switches SWc1 to SWc3. At this time, the battery voltage of each of the first to third battery packs BP1 to BP3 reaches a maximum voltage Vmax and has exceeded the upper limit voltage Vu of the load device, so that discharge is inhibited.

Although each battery pack in the second group is in a charge requesting state, the controller 30 suspends charge during a period in which the battery voltages of all the other groups (i.e., the first group here) is equal to or higher than the upper limit voltage Vu (timing T2 to timing t3).

Then, at timing t3 when the battery voltage of the first group falls below the upper limit voltage Vu, the fourth and fifth charge switches SWc4, SWc5 corresponding to the second group are PWM controlled at a duty ratio of 67% to start charging the fourth and fifth battery packs BP4, BP5.

At this time, the charge rate of the fourth and fifth battery packs BP4, BP5 coincides with the charge rate of the first to third battery packs BP1 to BP3. Hence the battery voltage of the second group reaches the fully charged state under the same condition as that of the first group regardless of the difference in the number of batteries in the group, so that not only the maximum voltage Vmax (timing t4) but also the trajectory of the subsequent voltage drop coincide. Therefore, the final charge capacities of all the battery packs are substantially equalized at a battery voltage slightly lower than the upper limit voltage Vu (timing t5).

As described above, the backup power supply device 1 according to the present embodiment divides the first to fifth battery packs BP1 to BP5 connected in parallel into a plurality of groups and charges the battery packs for each group by PWM control of a duty ratio corresponding to the number of batteries in the group. Thus, the backup power supply device 1 can keep the charge speed constant for all the battery packs even when the charge current supplied from the charger 10 is constant and the number of battery packs in the group is different. Therefore, according to the backup power supply device 1 of the present embodiment, it is possible to equalize charge rates among the groups without changing the charge current output by the charger 10 even when there is a difference in the number of batteries in the group to be charged simultaneously.

### <Second Embodiment>

Next, a second embodiment of the present invention will be described. A backup power supply device 1 according to the second embodiment differs from the first embodiment in that a sixth battery pack BP6 is connected in parallel in the battery module 20 of the backup power supply device 1 according to the first embodiment. Hereinafter, components different from those of the first embodiment will be described, and components common to those of the first embodiment will be denoted by the same reference numerals and detailed description thereof will be omitted.

In the backup power supply device 1 according to the second embodiment, the sixth battery pack BP6 having the same configuration as those of the first to fifth battery packs BP1 to BP5 of the first embodiment is connected in parallel to the first to fifth battery packs BP1 to BP5. In the present embodiment, only the sixth battery pack BP6 is charged separately from the first group and the second group as a new third group.

Thus, the numbers of batteries in the first to third groups of the present embodiment are three, two, and one, respectively, and the controller 30 sets the duty ratio of the PWM control to 3:2:1 in the charge of each group. For example, when the first group having the largest number of batteries is charged at a duty ratio of 100%, the controller 30 charges the second group at a duty ratio of 67% and the third group at a duty ratio of 33%, whereby the battery capacities of the respective groups can be equalized.

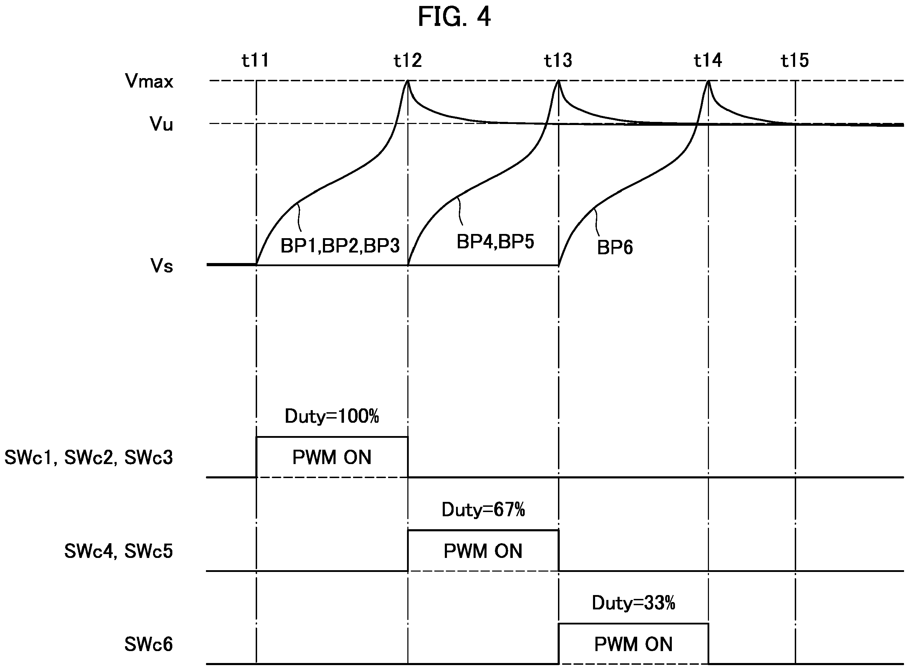

FIG. 4 is a timing chart illustrating the battery voltages of the battery packs and the operations of the charge switches when each group according to the second embodiment is charged sequentially. By executing the same charge control procedure as in the first embodiment, the controller 30 performs PWM control of the first to third charge switches SWc1 to SWc3 corresponding to the first group at a duty ratio of 100% at timing t11 and starts charging the first to third battery packs BP1 to BP3.

When each battery pack in the first group reaches the fully charged state at timing t12, the controller 30 stops the first to third charge switches SWc1 to SWc3. At this time, the battery voltage of each of the first to third battery packs BP1 to BP3 reaches the maximum voltage Vmax and has exceeded the upper limit voltage Vu of the load device, so that discharge is inhibited.

However, in the present embodiment, even when the first group is in a non-dischargeable state and the second group is being charged, the battery pack of the third group can be discharged at the time of power outage. Therefore, the controller 30 can start charging the second group on a condition that the charge of the first group is completed (timing t13).

Also, at timing t13 when the charge of the second group is completed, the controller 30 can perform PWM control of the sixth charge switch SWc6 corresponding to the third group at a duty ratio of 33% and immediately start charging the sixth battery pack BP6. After the sixth battery pack BP6 reaches the fully charged state (timing t14), the charge capacity of each battery pack is substantially equalized after timing t15 when the battery voltage is slightly lower than the upper limit voltage Vu.

Therefore, according to the backup power supply device 1 of the present embodiment, even when battery packs of a plurality of groups are in the charge requesting state, it is possible to continuously charge each group without suspending the charge.

This concludes the description of the embodiments, but the present invention is not limited to each of the embodiments described above. For example, although each of the above embodiments has exemplified the configuration in which charge is performed in order from the battery pack in the first group, charge may be started from the second group or the third group, or charge may be started from a group in which the initial voltage Vs before charge is low.

### <Aspects of the Invention>

A backup power supply device according to a first aspect of the present invention is provided with: a plurality of secondary batteries connected in parallel; a charger that supplies a charge current to each of the secondary batteries; a plurality of charge switches that individually connect and disconnect charge paths of a plurality of the secondary batteries; and a controller that controls a plurality of the charge switches. The controller divides a plurality of the secondary batteries into a plurality of groups and performs PWM control of each of the charge switches at a duty ratio corresponding to the number of batteries in each of the groups to charge the secondary batteries for each of the groups.

In the backup power supply device according to the first aspect, a plurality of secondary batteries connected in parallel are divided into a plurality of groups, and the secondary batteries are charged for each group by PWM control at a duty ratio corresponding to the number of batteries in each group. Thus, the backup power supply device can keep the charge rate constant for all the secondary batteries even when the charge current supplied from the charger is constant and the number of secondary batteries in the group is different. Therefore, according to the backup power supply device of the present invention, it is possible to equalize charge rates among the groups without changing the charge current output by the charger even when there is a difference in the number of batteries in the group to be charged simultaneously.

In a backup power supply device according to a second aspect of the present invention, in the backup power supply device according to the first aspect described above, the controller charges the group having the largest number of batteries at a duty ratio of 100%.

According to the backup power supply device of to the second aspect, it is possible to maximize the charge rate for all the groups while maintaining the charge rate of each secondary battery uniformly regardless of the difference in the number of batteries in each charge group.

In a backup power supply device according to a third aspect of the present invention, in the backup power supply device according to the first or second aspect described above, the controller individually corrects the duty ratio in order to make the charge current, supplied to each of a plurality of the secondary batteries in the group, a desired current.

According to the backup power supply device of to the third aspect, even when there is a difference in, for example, charge current among the secondary batteries in the group to be charged simultaneously, the charge rates of all the secondary batteries can be equalized by adjusting the charge speed based on the duty ratio with respect to the charge switches.

In a backup power supply device according to a fourth aspect of the present invention, in the backup power supply device according to any one of the first to third aspects described above, a plurality of discharge switches that individually connect and disconnect discharge paths of a plurality of the secondary batteries is provided, and when a discharge request is received from an external load device, the controller controls only the discharge switch corresponding to the secondary battery among a plurality of the secondary batteries to be on, the secondary battery having a battery voltage less than an upper limit voltage of the load device.

According to the backup power supply device according to the fourth aspect, when the plurality of secondary batteries connected in parallel are discharged to the load device, the discharge of the secondary battery having a battery voltage exceeding the upper limit voltage of the load device is regulated by the discharge switch, whereby a failure caused by application of an excessive voltage to the load device can be prevented.

In a backup power supply device according to a fifth aspect of the present invention, in the backup power supply device according to the fourth aspect described above, in the case of charging one of the groups, the controller suspends charge during a period in which all battery voltages in the other of the groups are equal to or higher than the upper limit voltage.

According to the backup power supply device according to the fifth aspect, since the battery voltage of each of the secondary batteries included in at least one group is always maintained below the upper limit voltage of the load device, it is possible to stand by in a dischargeable state regardless of the timing of the discharge request.

In a backup power supply device according to a sixth aspect of the present invention, in the backup power supply device according to the fourth aspect described above, when the number of groups is three or more, on a condition that charge of one of the groups is completed, the controller starts charging another of the groups.

According to the backup power supply device according to the sixth aspect, even when the battery voltage of the first group is equal to or higher than the upper limit voltage of the load device, the third group of the remaining groups can be made to stand by in the dischargeable state, so that the charge of the second group can be started immediately after the completion of the charge of the first group.

A charge/discharge control method according to a seventh aspect of the present invention is a charge/discharge control method for a plurality of secondary batteries connected in parallel in which charge paths are individually connected and disconnected by a plurality of charge switches, the method including: allocating a plurality of the secondary batteries into a plurality of groups; and performing PWM control of each of the charge switches at a duty ratio corresponding to the number of batteries in each of the groups to charge the secondary batteries for each of the groups.

In the charge/discharge control method according to the seventh aspect, a plurality of secondary batteries connected in parallel are divided into a plurality of groups, and the secondary batteries are charged for each group by PWM control at a duty ratio corresponding to the number of batteries in each group. Thus, the backup power supply device can keep the charge rate constant for all the secondary batteries even when the charge current supplied to each of the plurality of secondary batteries is constant and the number of secondary batteries in the group is different. Therefore, according to the charge/discharge control method of the present invention, it is possible to equalize charge rates among the groups without changing the charge current supplied to the secondary battery even when there is a difference in the number of batteries in the group to be charged simultaneously.

In a charge/discharge control method according to an eighth aspect of the present invention, in the charge/discharge control method according to the seventh aspect described above, the controller charges the group having the largest number of batteries at a duty ratio of 100%.

According to the charge/discharge control method of the eighth aspect, it is possible to maximize the charge rate for all the groups while maintaining the charge rate of each secondary battery uniformly regardless of the difference in the number of batteries in each charge group.

In a charge/discharge control method according to a ninth aspect of the present invention, in the charge/discharge control method according to the seventh or eighth aspect described above, the duty ratio is individually corrected in order to make the charge current, supplied to each of a plurality of the secondary batteries in the group, a desired current.

According to the charge/discharge control method of the ninth aspect, even when there is a difference in, for example, charge current among the secondary batteries in the group to be charged simultaneously, the charge rates of all the secondary batteries can be equalized by adjusting the charge speed based on the duty ratio with respect to the charge switches.

In a charge/discharge control method according to a tenth aspect of the present invention, in the charge/discharge control method according to any one of the seventh to ninth aspects described above, a plurality of discharge switches individually connect and disconnect discharge paths of a plurality of the secondary batteries, and when a discharge request is received from an external load device, only the discharge switch corresponding to the secondary battery having a battery voltage less than the upper limit voltage of the load device is controlled to be on among a plurality of the secondary batteries.

According to the charge/discharge control method of the tenth aspect, when the plurality of secondary batteries connected in parallel are discharged to the load device, the discharge of the secondary battery having a battery voltage exceeding the upper limit voltage of the load device is regulated by the discharge switch, whereby a failure caused by application of an excessive voltage to the load device can be prevented.

In a charge/discharge control method according to an eleventh aspect of the present invention, in the charge/discharge control method according to the tenth aspect described above, in the case of charging one of the groups, charge is suspended during a period in which all battery voltages in the other of the groups are equal to or higher than the upper limit voltage.

According to the charge/discharge control method of the eleventh aspect, since the battery voltage of each of the secondary batteries included in at least one group is always maintained below the upper limit voltage of the load device, it is possible to stand by in a dischargeable state regardless of the timing of the discharge request.

In a charge/discharge control method according to a twelfth aspect of the present invention, in the charge/discharge control method according to the tenth aspect described above, when the number of groups is three or more, on a condition that charge of one of the groups is completed, charge of another of the groups is started.

According to the charge/discharge control method of the twelfth aspect, even when the battery voltage of the first group is equal to or higher than the upper limit voltage of the load device, the third group of the remaining groups can be made to stand by in the dischargeable state, so that the charge of the second group can be started immediately after the completion of the charge of the first group.

## Claims

1. A backup power supply device comprising:
a plurality of secondary batteries connected in parallel;
a charger that supplies a charge current to each of the secondary batteries;
a plurality of charge switches that individually connect and disconnect charge paths of a plurality of the secondary batteries; and
a controller that controls a plurality of the charge switches,
wherein the controller divides a plurality of the secondary batteries into a plurality of groups and performs pulse-width modulation (PWM) control of each of the charge switches at a duty ratio corresponding to the number of batteries in each of the groups to charge the secondary batteries for each of the groups.

2. The backup power supply device according to claim 1, wherein the controller charges the group having the largest number of batteries at a duty ratio of 100%.

3. The backup power supply device according to claim 1 or 2, wherein the controller individually corrects the duty ratio in order to make the charge current, supplied to each of a plurality of the secondary batteries in the group, a desired current.

4. The backup power supply device according to any one of claims 1 to 3, further comprising a plurality of discharge switches that individually connect and disconnect discharge paths of a plurality of the secondary batteries,
wherein when a discharge request is received from an external load device, the controller controls only the discharge switch corresponding to the secondary battery among a plurality of the secondary batteries to be on, the secondary battery having a battery voltage less than an upper limit voltage of the load device.

5. The backup power supply device according to any one of claims 1 to 4, wherein in a case of charging one of the groups, the controller suspends charge during a period in which all battery voltages in the other of the groups are equal to or higher than the upper limit voltage.

6. The backup power supply device according to any one of claims 1 to 5, wherein when the number of the groups is three or more, on a condition that charge of one of the groups is completed, the controller starts charging another of the groups.

7. A charge/discharge control method for a plurality of secondary batteries connected in parallel in which charge paths are individually connected and disconnected by a plurality of charge switches, the method comprising:
allocating a plurality of the secondary batteries into a plurality of groups; and
performing pulse-width modulation (PWM) control of each of the charge switches at a duty ratio corresponding to the number of batteries in each of the groups to charge the secondary batteries for each of the groups.

8. The charge/discharge control method according to claim 7, wherein the group having the largest number of batteries is charged at a duty ratio of 100%.

9. The charge/discharge control method according to claim 7 or 8, wherein the duty ratio is individually corrected in order to make the charge current, supplied to each of a plurality of the secondary batteries in the group, a desired current.

10. The charge/discharge control method according to any one of claims 7 to 9, wherein
a plurality of discharge switches individually connect and disconnect discharge paths of a plurality of the secondary batteries, and
when a discharge request is received from an external load device, only the discharge switch corresponding to the secondary battery having a battery voltage less than the upper limit voltage of the load device is controlled to be on among a plurality of the secondary batteries.

11. The charge/discharge control method according to any one of claims 7 to 10, wherein in a case of charging one of the groups, charge is suspended during a period in which all battery voltages in the other of the groups are equal to or higher than the upper limit voltage.

12. The charge/discharge control method according to any one of claims 7 to 11, wherein when the number of the groups is three or more, on a condition that charge of one of the groups is completed, charge of another of the groups is started.
